# EUROPEAN PATENT SPECIFICATION

(11) **EP 2 733 834 B1**
(45) Date of publication and mention of the grant of the patent: **15.06.2016**
(21) Application number: 13193077.8
(22) Date of filing: 15.11.2013
(51) Int. Cl.: F04B 43/04, H02K 41/035

(54) **AN IMPROVED MAGNETIC CIRCUIT**
VERBESSERTER MAGNETISCHER SCHALTKREIS
CIRCUIT MAGNÉTIQUE AMÉLIORÉ

(30) Priority: 15.11.2012 US 201261727012 P; 15.11.2012 EP 12192889
(43) Date of publication of application: 21.05.2014
(73) Proprietor: Shenzhen Mindray Bio-Medical Electronics Co., Ltd., Shenzhen 518057 (CN)
(72) Inventor: Gabrielsson, Joakim, 183 57 Täby (SE); Werner, Johan, 142 52 Skogsås (SE); Boxell, Torbjörn, 125 34 Älvsjö (SE)
(74) Representative: KIPA AB

(56) References cited:
- DE-A1-102007 062 383
- DE-A1-102010 009 670
- FR-A1- 2 797 358
- US-A- 4 337 406
- US-A- 5 814 907
- US-A1- 2007 126 303
- US-A1- 2008 036 563
- US-A1- 2010 201 209

## Description

### BACKGROUND OF THE INVENTION

### Field of the Invention

This disclosure pertains in general to voice coil. More particularly the disclosure relates to voice coils for driving membrane pumps used, for example, as sampling pumps in devices for patient monitoring, breath monitoring, anaesthesia monitoring, especially for medical ventilation monitoring and gas analyzers for monitoring gas composition in patient's breathing.

### Description of the Prior Art

The common way of designing a magnetic circuit, such as for a voice coils, is to make the magnet strictly cylindrical and if a pole shoe is used it is normally strictly cylindrical too. The pole shoe is used to collect the magnetic flux and redirect it to a pure radial direction. The density of the magnetic flux inside the steel parts (magnet cup and pole shoe) is depending of the section area of the parts. If it is too concentrated, the steel will be saturated and not able to conduct any more flux which leads to both leakage of magnetic flux (i.e. immediate magnetic material will be attracted) and limit the circuit's capacity. The cylindrical design of the magnet cup is also limiting the voice coil to have a mount of its free shaft end outside this cylindrical outer shape.

US5814907 discloses an electromagnetic force motor with internal eddy current damping to provide damping of the armature velocity to provide an electromagnetic force motor with improved dynamic performance and great stability.

US2008/036563 discloses an actuator that includes a moving coil assembly with improved acceleration for payloads at an optimum volume and mass of actuator.

Neither of US5814907 and US2008/036563 disclose any improvements with respect to avoid leakage of magnetic flux and increase the circuit's capacity.

Hence, a new improved design of a magnetic circuit with better directing capability of the flux would be advantageous, especially if the same magnetic circuit has a small volume.

### SUMMARY OF THE INVENTION

Accordingly, embodiments of the present disclosure preferably seek to mitigate, alleviate or eliminate one or more deficiencies, disadvantages or issues in the art, such as the above-identified, singly or in any combination by providing a device, system or method according to the appended patent claims for providing an improved magnetic circuit, such as in voice coil devices. These voice coils may be used in membrane pumps for patient monitoring, breath monitoring, anaesthesia monitoring, especially for medical ventilation monitoring and gas analyzers for monitoring gas composition in patient's breathing.

Disclosed herein are device, system and methods for providing the improved magnetic circuit.

According to one aspect of the disclosure, a magnetic circuit for a voice coil includes a magnet cup which has a one sided open cylindrical shape with a base, the base has an inner surface, a conical magnet which has a side with an at least partial conical shape, and a pole shoe which has a side with a recessed conical shape corresponding to the conical shape of the conical magnet, is disclosed. The magnet cup, the conical magnet and the pole shoe are stacked so that the conical magnet is centrally arranged on the base inside said magnet cup, then the pole shoe is arranged on the conical magnet so that the side with a recessed conical shape of said pole shoe is in contact with the side with a conical shape of said conical magnet. The stack is arranged such that an air gap is obtained between an inner wall surface of the magnet cup and the stacked conical magnet and said pole shoe.

The conical shape allows for a better distribution of magnetic flux inside the pole shoe. The design also improves the assembly of the magnetic circuit, as the conical shape allows for a self-alignment between the conically shaped parts.

In some examples of the disclosure, the base has an inner surface area with a partially conical shape protruding inward the magnet cup and the conical shape is at a central portion of the base of the cylindrical shape. Further, the conical magnet has a second side with a recessed conical shape corresponding to the conical shape of the inner surface area of base.

By having a conical shaped interface between the conical magnet and the inner surface of the magnet cup improves the distribution of the magnetic flux in the magnetic circuits.

Even further, by having all three parts conically shaped improves the self-alignment properties of the stack even further.

In some examples of the disclosure the base has an outer surface with a recessed conical shape.

Moreover, the conical shape of the base makes it possible to have a recessed outer surface of the base which creates a space which may be used to add a support for a free shaft end without adding any volume outside the cylindrical volume. Hence the voice coil may be smaller in size.

An airgap may be obtained between an inner surface area of the cylindrical shape of the magnet cup and the outer surface of the stacked conical magnet and the pole shoe. In this airgap a coil may be arranged.

In some examples is the coil entwined by self-adhesive lining. This design may take advantage of the limit space of the airgap. Hence smaller voice coils are possible to design.

In some further examples, a bore may go at least partially through the height of the stack. The bore is preferably arranged at the centre of the stack. In this bore a shaft may be arranged. The shaft may be connected to the coil so that when the coil moved the shaft will move. The motion of the shaft is a linear reciprocating stroke motion.

In some examples of the disclosure, the angle of the conical shapes spans the range 10 to 45 degrees.

Some materials of which the conical magnet may be made of are neodymium, samarium-cobalt, or alnico.

The pole shoe and the magnetic cup may be made of Ferromagnetic metals and/or alloys.

According to another aspect of the disclosure, a membrane pump is disclosed. The membrane pump comprises a magnetic circuit in accordance with the disclosure herein, a pump housing with a chamber having an open end. The membrane pump also includes a membrane element having a first area arranged to cover the open end of the chamber. The magnetic circuit is arranged and adapted to transfer a force by a stroke motion on the membrane.

In some examples of the membrane pump, the membrane element comprises a central section with a second area surrounded by a periphery section. The central section is thicker than the periphery section, and the second area of the central section is smaller than a third area of the open end of the chamber of which the central section is arranged over.

The advantages with this disclosed configuration is that it prevents the stroke from hitting the bottom of the chamber since a pump stroke is decelerated in a progressive way which not only makes the stop silent but also reduces the mechanical vibrations and keep them to a minimum. Further, the deceleration reduces the effective pump area of the membrane closer to the end of a stroke. Since the force of the stroke is constant, the pump becomes stronger closer to the end of the stroke.

In some further examples, the chamber may have bevelled inner walls. The central section of the membrane element is centrally arranged over the open end and the first area of the membrane element is larger than the third area of the open end.

Also, in some examples the pump housing may have an enlarged surface surrounding the open end of the chamber with a total area having at least the same size as the membrane element.

In some further examples of the disclosure, the membrane element is slidably clamped between the elongated surface of the pump housing and a second member of the pump housing.

The advantages with this configuration are that by holding a membrane element slidably fixed at a larger diameter than the actual working diameter (area) is that the membrane if free to move radial and stretch. Hence a longer pump stroke may be achieved (i.e. more volume can be pumped per stroke). Also a longer life of the membrane due to lower fatigue stress levels and more effective use of the available pump force may be obtained.

According to a further aspect of the disclosure, a method for assembling part to a magnetic circuit is disclosed. The method comprises, utilizing a conical design of the parts and a magnetic force of the magnetic circuit to allow different parts to self-orient.

The conical shape allows for a much easier assembly operation since the shape makes the parts self-orienting.

In this disclosure the word "conical" is defined both as strictly conical but also as a truncated cone.

It should be emphasized that the term "comprises/comprising" when used in this specification is taken to specify the presence of stated features, integers, steps or components but does not preclude the presence or addition of one or more other features, integers, steps, components or groups thereof.

### BRIEF DESCRIPTION OF THE DRAWINGS

These and other aspects, features and advantages of which examples of the disclosure are capable of will be apparent and elucidated from the following description of embodiments of the present disclosure, reference being made to the accompanying drawings, in which
Fig. 1A and 1B are illustrating cross-sectional schematic overviews of examples of a magnetic circuit;
Fig. 2A and 2B are illustrating cross-sectional schematic overviews of flux distribution in a prior art circuit and an example of the disclosed circuit;
Fig. 3A and B are illustrating cross-sectional schematic overviews of simulated flux distribution in a prior art circuit and an example of the disclosed circuit; and
Fig. 4 is illustrating a cross-sectional schematic overview of a membrane pump.

### DESCRIPTION OF EMBODIMENTS

Specific examples of the disclosure now will be described with reference to the accompanying drawings. This disclosure may, however, be embodied in many different forms and should not be construed as limited to the embodiments set forth herein; rather, these embodiments are provided so that this disclosure will be thorough and complete, and will fully convey the scope of the disclosure to those skilled in the art. The terminology used in the detailed description of the embodiments illustrated in the accompanying drawings is not intended to be limiting of the disclosure. In the drawings, like numbers refer to like elements.

The following description focuses on an embodiment of the present disclosure applicable to a magnetic circuit and to a voice coil. The voice coil is to be used as an actuator. For example, the voice coil may be used as an actuator for a membrane pump, such as a sampling pump in devices for patient monitoring, breath monitoring, anaesthesia monitoring, especially medical ventilation monitoring and gas analyzers for monitoring gas composition in patient's breathing. However, it will be appreciated that the description is not limited to this application but may be applied to many other systems where a fluid pump is required.

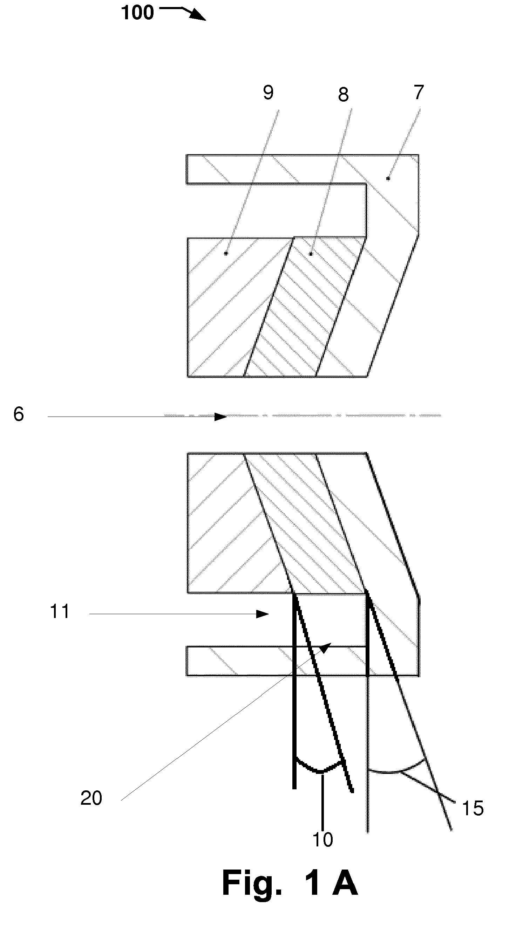

Fig. 1A is a magnetic circuit 100. The magnetic circuit comprises a magnet cup 7 which have a one sided open cylindrical shape with a base. The base is partially conical and the cone is directed inward the cylinder. The cone shape is located at a central portion of the base of the cylinder. The magnetic circuit 100 also comprises a conical magnet 8 and a pole shoe 9. The pole shoe 9 has one side which has a conical shape being directed inwards. These three components are stacked so that the conical magnet 8 is arranged on the base, inside the magnet cup 7. The pole shoe 9 is then arranged on the conical magnet 8.

Additionally, when arranged in this fashion an airgap 11 is obtained between an inner surface area 20 of the cylinder and one side of the parts stacked inside the magnetic cup 7.

In this airgap, a coil (not seen in the figure) may be arranged. In some examples of the magnetic circuit, the coil is entwined by self-adhesive lining. This design may take advantage of the limit space of the airgap. Hence a smaller design of the magnetic circuit is possible.

Alternatively to the illustration in Fig. 1A, only the interface between pole shoe 9 and the conical magnet 8 may be conical.

By using a pole shoe 9 in the magnetic circuit 100 wherein the pole shoe 9 having a recessed conical shape in contact with a corresponding conical shape of an conical magnet, the magnetic flux inside the conicla magnet 8 is purely axial. Thus all of the flux is transferred into the pole shoe 9 and the magnet cup 7. Since the flux inside the pole shoe 9 is redirected towards the magnetic cup 7 the flux density is lower closer to the cylindrical centre than at the outer side. It is therefore an advantage to make the design conical since this also allows for a larger sized magnet, if desirable.

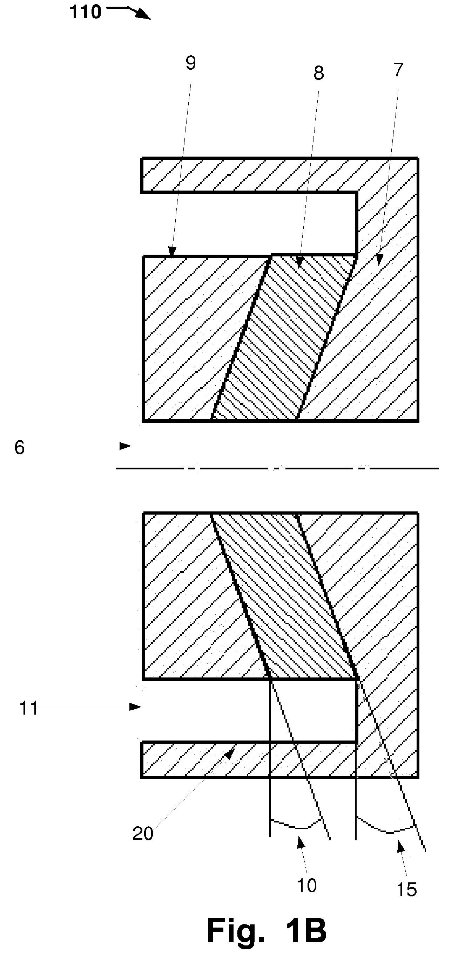

As illustrated in Figure 1B the magnetic cup 7 does not need to have a conical recess on an outer surface of the base.

On the other side, if also the magnets 8 other side (the one facing the magnet cup 7) is made conical and the base of the cup shape 7 too (like in Fig 1), a small conical space is created which is suited to host a good flexible support for the oscillating free voice coil shaft without requiring any extra space for this necessary feature.

Some examples of magnetic materials, from which the conical magnet 8 may be made of, are neodymium, samarium-cobalt, or alnico. The pole shoe 9 and the magnetic cup 7 may be made of ferromagnetic metals and/or alloys.

Additionally, in some examples of the magnetic circuit 100 in figures 1A and 1B, the angle 10 of the conical shapes span the range from 10 to 45 degrees. Additionally and/or alternatively if also the interface between the conical magnet 8 and the inner surface of the base of the magnetic cup is conical, such as illustrated in figure 1A and 1B, the angle 15 may also be from 10 to 45 degrees.

The angles 10 and 15 may have the same gradient or the angles 10 and 15 may have different gradients.

The thickness proportions of between different part such as the wall of the magnetic cup 7 and the pole shoe 9 in regard to magnetic flux, depends on the grad and strength of the magnet. But it also depends on the function of the magnetic circuit and the cylindrical section area.

In some examples of the magnetic circuit 100, the stack of parts may have a bore 6 going at least partially through. The bore 6 is arranged at the centre of the stack. A shaft connected to the coil in the airgap 11 may be arranged in the bore 6. When driving a voltage or current through the coil shaft will move linear in a reciprocating stroke motion. This can be utilised as a pump head to exert a force on a membrane of a membrane pump.

Also, assembling a voice coil magnetic circuit requires much carefulness. It is absolutely necessary to assemble the magnet and the pole shoe concentric to make it work. This can be very tricky since the magnet forces always pulls the magnet and pole shoe towards the cylindrical wall of the magnet cup. By using the conical design of the parts, the magnetic circuit becomes self-oriented. The magnetic force will pull the conical parts together at the centre of the cup as intended. Hence this effect may be improved if all three parts have conical shapes.

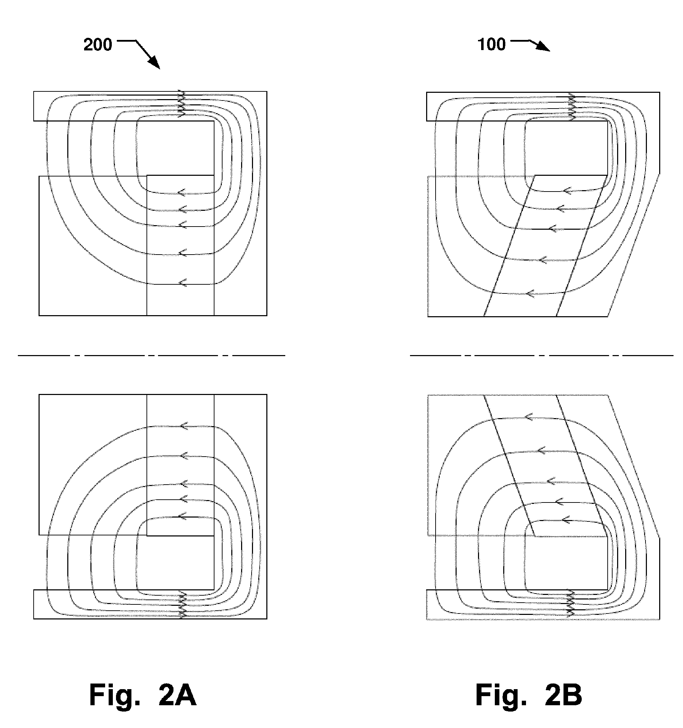

Fig. 2A and 2B are schematically illustrating the magnetic flux distribution in a prior art (Fig 2A) magnetic circuit 200 and in an example of the disclosed (Fig 2B) magnetic circuit 100.

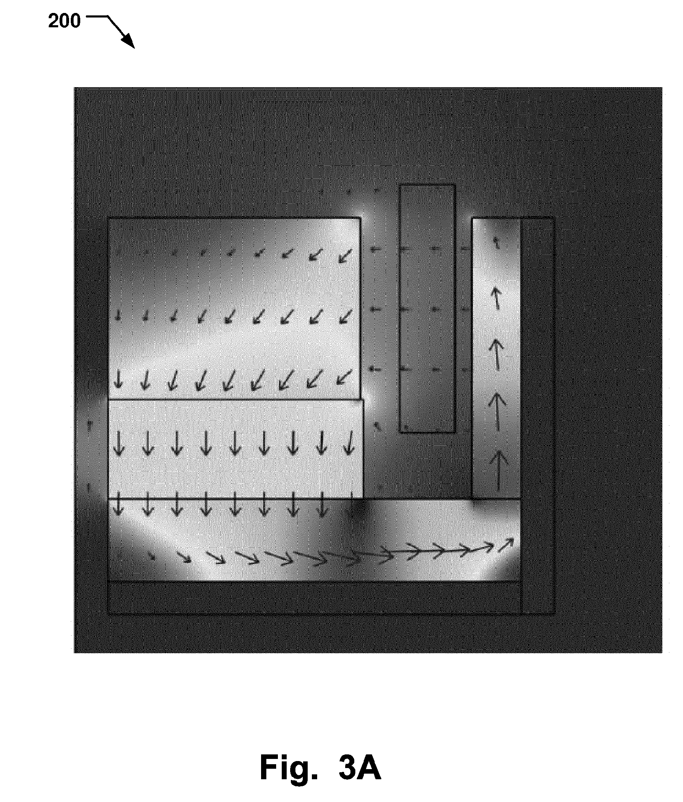

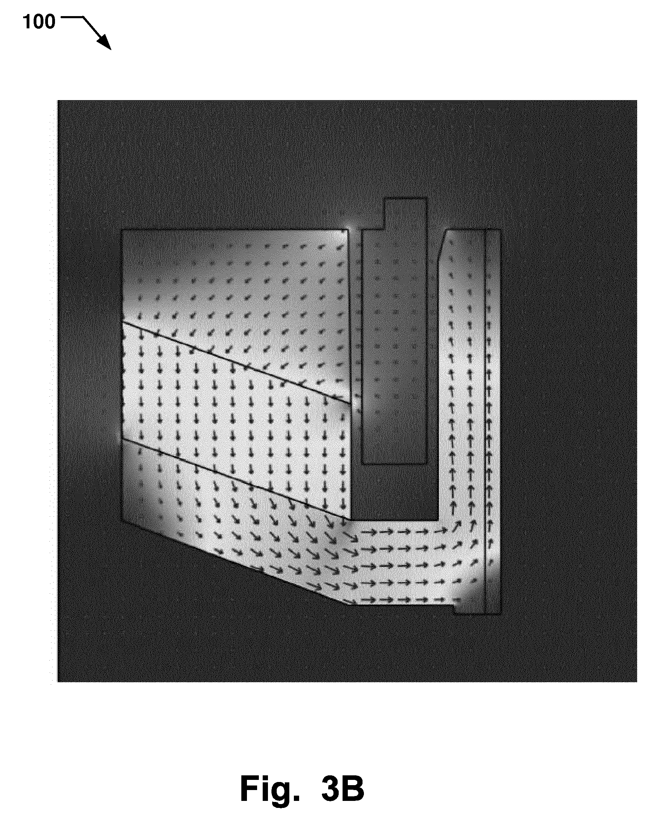

Fig. 3A and 3B are simulations to schematically illustrate the magnetic flux distribution in a prior art (Fig 3A) magnetic circuit 200 and in an example of the disclosed (Fig 3B) magnetic circuit 100. The scales of the simulations are not the same so Fig. 3A and 3B are only used for the purpose of illustrating the differences in magnetic flux distribution.

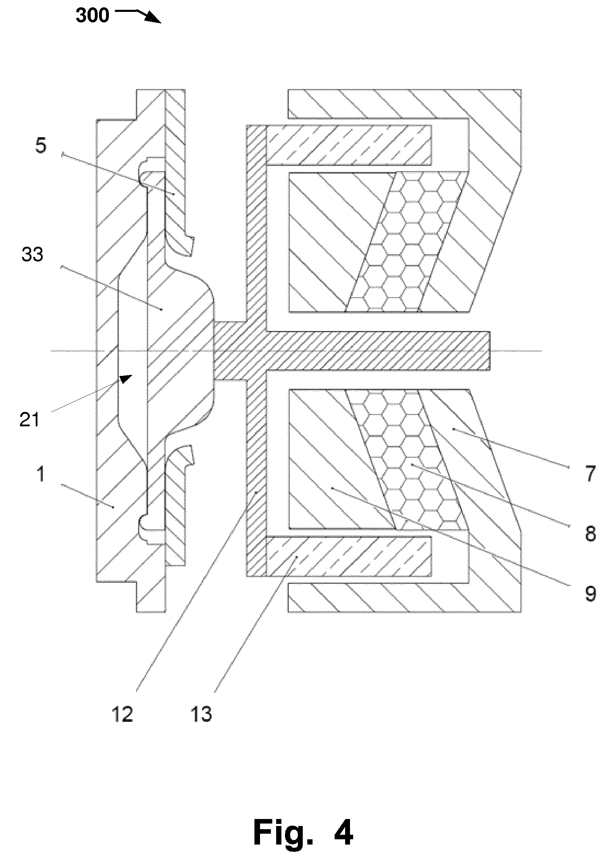

Fig. 4 illustrates a cross-sectional view of an example of a membrane pump 300. The membrane pump 300 comprises a membrane element 33 a pump housing 1, and optional second housing member 5 (e.g. membrane fixing plate) and a pump chamber 21. In this example, the pump chamber 21 has bevelled walls for abutting an area where the membrane element 33 becomes thicker. Hence decelerate the pump stroke in a progressive way.

Aportion of the membrane may be slidably clamped between the second member 5 and the pump housing 1. This allows the membrane to move radial and stretch when a force is applied.

The advantages with this configuration are that by holding a membrane element slidably fixed at a larger diameter than the actual working diameter (area), the membrane is free to move radial and stretch. Hence a longer pump stroke may be achieved (i.e. more volume can be pumped per stroke). Also, due to the radial movement, the same pump volume can be maintained with less stretching which will increase the life of the membrane due to lower fatigue stress levels and more effective use of the available pump force may be obtained.

Additionally and/or alternatively, by designing the edge of the second pump housing member 5 (i.e. membrane fixing plate) to be conical or with one or more radii positioned in the area where the membrane element 32 becomes stiffer (thicker) it may also be possible to decelerate the pump stroke in a progressive way. This will make the stops, when the membrane element is in its turning point silent and also reduces the mechanical vibrations due to the progressive motion deceleration.

The pump further comprises a pump head 12. In this example, the pump head 12 is abutting the central section of the membrane element 33. Alternatively, in some examples, the pump head may be mechanically attached to the top of central section, such as inserted into the central section or a screw could be used to secure them together. When using a pump head 12 abutting the top of the central section an adhesive may be used between the top of the central section and the abutting area of the pump head 12 to affix the two members. Examples of adhesives may be, glue, sticky tape, etc.

In this example depicted in Fig 4, the actuator exerting a force on the membrane element 33 is a voice coil. The voice coil is used to transmit a reciprocating stroke motions by the pump head 12 to the membrane element 33. Specifically, the voice coil may be a cylindrical voice coil.

In one example, the coil 13 is a circular cylinder structure, which is fixed on the pump head 12 and placed in an air gap. The air gap is enclosed by a magnetic cup with conical bottom 7, a conical magnet 8, such as a permanent magnet, and a one side conical pole shoe 9.

Additionally, in order to maximize the utilization of the magnetic field in the air gap and reduce the size of the pump 300, the coil 13 may be a skeletonless coil, entwined by self-adhesive lining. This design may take advantage of the limit space of the air gap, hence it's possible to design smaller membrane pumps 300.

In the example illustrated in Fig. 4, the magnet cup with a conical bottom 7 is positioned as an inverted M-shape. The contact surface between the conical pole shoe 9, the conical magnet 8 and the contact surface between the conical magnet and conical bottom of the magnet cup 7 are all tapered. The tapered surfaces are tapered in the same direction. Such structure increases the side area of the conical pole shoe 9, making the magnetic field in the air gap distribute evenly radially.

This design allows for a larger magnet, better distribution of the magnetic flux inside the pole shoe 9. Further, the conical shape provides better support for the free shaft of the pump head 12 without adding any volume outside of the cylinder volume. Thus the magnetic field is as large as possible when the coil 13 works in the air gap.

In Fig 4, the working principle of the membrane pump 300 is: the coil 13 positioned in the magnetic field formed by the one side conical pole shoe 9, the conical magnet 8 and the magnet cup with conical bottom 7. When an alternating voltage is transmitted to the coil 13, the coil 13 will produce an alternating ampere force to drive the pump head 12 in reciprocating linear motion.

The pump cycle will produce a cycle of positive and negative pressure in the pump chamber 21. When pressure in the sealed room is negative, fluid will move through a pump inlet into the chamber 21. When pressure in the sealed room is positive, the pump 300 will move fluid out through an outlet.

In the example illustrated in Fig 4, a small voice coil is adopted to drive membrane to do linear motion so that large transmission mechanisms are eliminated. Thus the size of the membrane pump 300 is reduced. The voice coil does not affect the working life of the pump 300, because the voice coil does not comprise structures that are easily worn out. The voice coil drives the membrane element 33 directly without the process of transforming motion to another; hence no intermediate energy is consumed. Further, there is no starting torque problem; hence the pump 300 may start almost instantly by applying a small voltage. The voice coil therefore also output a force or a displacement of the pump head 12 to collect a small volume of fluid even at small driving voltage or current.

Also, the reciprocating motion of the pump head 12 is controlled by controlling the frequency of the voltage. Because the magnitude of reciprocating motion is dependent to the amplitude of the current, the collected flow size may be easily controlled by adjusting the amplitude of the voltage to the voice coil.

While several embodiments of the present disclosure have been described and illustrated herein, those of ordinary skill in the art will readily envision a variety of other means and/or structures for performing the functions and/or obtaining the results and/or one or more of the advantages described herein, and each of such variations and/or modifications is deemed to be within the scope of the present disclosure. More generally, those skilled in the art will readily appreciate that all parameters, dimensions, materials, and configurations described herein are meant to be exemplary and that the actual parameters, dimensions, materials, and/or configurations will depend upon the specific application or applications for which the teachings of the present disclosure is/are used. Also, different method steps than those described above, performing the method by hardware, may be provided within the scope of the disclosure. The different features and steps of the disclosure may be combined in other combinations than those described. The scope of the invention is only limited by the appended patent claims

## Claims

1. A magnetic circuit for a voice coil, comprising:
a magnet cup (7) which has a one sided open cylindrical shape with a base, said base has an inner surface;
a conical magnet (8) which has a side with an at least partial conical shape;
a pole shoe (9) which has a side with a recessed conical shape corresponding to said conical shape of said conical magnet (8);
wherein said magnet cup (7), said conical magnet (8) and said pole shoe (9) are stacked so that said conical magnet (8) is centrally arranged on said base inside said magnet cup (7), said pole shoe (9) is arranged on the conical magnet (8) so that said side with a recessed conical shape of said pole shoe (9) is in contact with said side with a conical shape of said conical magnet (8), said stack is arranged such that an air gap (11) is obtained between an inner wall surface (20) of said magnet cup (7) and said stacked conical magnet (8) and said pole shoe (9).

2. The magnetic circuit of claim 1, wherein said base has an inner surface area with a partially conical shape protruding inward said magnet cup (7) and said conical shape is at a central portion of said base of said cylindrical shape; and wherein said conical magnet (8) has a second side with a recessed conical shape corresponding to said conical shape of said inner surface area of said base.

3. The magnetic circuit of claim 2, wherein the base has an outer surface with a recessed conical shape.

4. The magnetic circuit of any of claims 1 to 3, wherein a coil (13) is arranged in said air gap (11).

5. The magnetic circuit of claim 4, wherein said coil (13) is entwined by self-adhesive lining.

6. The magnetic circuit according to any of claims 1 to 5, wherein said stack has a bore (6) going at least partially through and said bore (6) is arranged at the centre of said stack.

7. The magnetic circuit of claim 6, wherein a shaft is arranged in said bore (6), and said shaft is connected to said coil (13).

8. The magnetic circuit of claim 7, wherein said shaft is linear movable in a reciprocating stroke motion.

9. The magnetic circuit according to any of claims 1 to 8, wherein the angles of said conical shapes span the range 10 to 45 degrees.

10. The magnetic circuit according to any of claims 1 to 9, wherein said conical magnet (8) is made of neodymium or samarium-cobolt or alnico.

11. The magnetic circuit according to any of claims 1 to 10, wherein said pole shoe (9) and magnetic cup (7) is made of Ferromagnetic metals or alloys.

12. A membrane pump, comprising:
a magnetic circuit according to any of claim 1 to 10;
a pump housing (1) with a chamber (21) with an open end;
a membrane element (33) having a first area and is arranged to cover said open end of said chamber (21); and
wherein said magnetic circuit is arranged and adapted to transfer a force by a stroke motion on said membrane (33).

13. The membrane pump according to claim 12, wherein said membrane element (33) comprises a central section with a second area surrounded by a periphery section;
wherein said central section is thicker than said periphery section, and said second area of said central section is smaller than a third area of said open end of said chamber (21) of which said central section is arranged over.

14. The membrane pump according to claims 13, wherein said chamber (21) has bevelled inner walls; and wherein said central section of said membrane element (33) is centrally arranged over said open end, and said first area of said membrane element (33) is larger than said third area.

15. The membrane pump according to any of claims 12 to 14, wherein said pump housing (1) has an enlarged surface surrounding said open end of said chamber with a total area having at least the same size as said first area of said membrane element (33).

16. The pump according to claim 15, wherein said membrane element (33) is slidably clamped between said elongated surface of said pump housing (1) and a second member (5) of said pump housing (1).

17. A method for assembling a magnetic circuit for a voice coil, comprising:
providing a magnetic cup (7) which has an one sided open cylindrical shape with a base, said base has an inner surface;
providing a conical magnet (8) which has a side with an at least partial conical shape;
providing a pole shoe (9) which has a side with a recessed conical shape corresponding to said conical shape of said magnet;
stacking said magnet cup (7), said conical magnet (8) and said pole shoe (9) so that said conical magnet (8) is centrally arranged on said base inside said magnet cup (7), said pole shoe (9) is arranged on the conical magnet (8) so that said side with a recessed conical shape of said pole shoe (9) is in contact with said side with a conical shape of said conical magnet (8), said stack is arranges such that an air gap (11) is obtained between an inner wall surface (20) of said magnet cup (7) and said stacked conical magnet (8) and said pole shoe (9), by utilizing said conical shapes and a magnetic force of said magnet for said parts to self-align when stacked.

## Patentansprüche

1. Magnetkreis für eine Schwingspule, umfassend:
Magnetbecher (7), der eine einseitig offene zylindrische Form mit einer Basis hat, wobei die Basis eine innere Fläche aufweist;
konischen Magneten (8), der eine Seite mit einer mindestens teilweise konischen Form hat;
Polschuh (9), der eine Seite mit einer vertieften konischen Form hat, welche der konischen Form des konischen Magneten (8) entspricht;
wobei der Magnetbecher (7), der konische Magnet (8) und der Polschuh (9) so aufgestapelt sind, dass der konische Magnet (8) zentral auf der Basis innerhalb des Magnetbechers (7) angeordnet ist, der Polschuh (9) so auf dem konischen Magneten (8) angeordnet ist, dass die Seite des Polschuhs (9) mit der vertieften konischen Form in Kontakt mit der Seite des konischen Magneten (8) mit einer konischen Form steht, wobei der Stapel so angeordnet ist, dass ein Luftspalt (11) zwischen einer inneren Wandfläche (20) des Magnetbechers (7) und dem gestapelten konischen Magneten (8) und dem Polschuh (9) entsteht.

2. Magnetkreis gemäß Anspruch 1, wobei die Basis eine innere Fläche mit einer teilweise konischen Form hat, die nach innen in den Magnetbecher (7) ragt, und sich die konische Form an einem zentralen Abschnitt der Basis der zylindrischen Form befindet; und wobei der konische Magnet (8) eine zweite Seite mit einer vertieften konischen Form aufweist, die der konischen Form der inneren Fläche der Basis entspricht.

3. Magnetkreis gemäß Anspruch 2, wobei die Basis eine äußere Fläche mit einer vertieften konischen Form aufweist.

4. Magnetkreis gemäß einem beliebigen der Ansprüche 1 bis 3, wobei eine Spule (13) in dem Luftspalt (11) angeordnet ist.

5. Magnetkreis gemäß Anspruch 4, wobei die Spule (13) von einer selbstklebenden Auskleidung umwunden ist.

6. Magnetkreis gemäß einem beliebigen der Ansprüche 1 bis 5, wobei der Stapel eine Bohröffnung (6) aufweist, die mindestens teilweise durchgehend ist, und wobei die Bohröffnung (6) im Zentrum des Stapels angeordnet ist.

7. Magnetkreis gemäß Anspruch 6, wobei eine Welle in der Bohröffnung (6) angeordnet ist, und wobei die Welle mit der Spule (13) verbunden ist.

8. Magnetkreis gemäß Anspruch 7, wobei sich die Welle in einer hin- und hergehenden Hubbewegung linear bewegen lässt.

9. Magnetkreis gemäß einem beliebigen der Ansprüche 1 bis 8, wobei die Winkel der konischen Formen den Bereich von 10 bis 45 Grad umfassen.

10. Magnetkreis gemäß einem beliebigen der Ansprüche 1 bis 9, wobei der konische Magnet (8) aus Neodym oder Samarium-Kobalt oder Alnico besteht.

11. Magnetkreis gemäß einem beliebigen der Ansprüche 1 bis 10, wobei der Polschuh (9) und der Magnetbecher (7) aus ferromagnetischen Metallen oder Legierungen bestehen.

12. Membranbecher, umfassend:
Magnetkreis gemäß einem beliebigen der Ansprüche 1 bis 10;
Pumpengehäuse (1) mit einer Kammer (21) mit einem offenen Ende;
Membranelement (33), das einen ersten Bereich hat und so angeordnet ist, dass es das offene Ende der Kammer (21) abdeckt; und
wobei der Magnetkreis so angeordnet und angepasst ist, dass er eine Kraft durch eine Hubbewegung auf die Membran (33) überträgt.

13. Membranpumpe gemäß Anspruch 12, wobei das Membranelement (33) einen zentralen Abschnitt mit einem zweiten Bereich umfasst, der von einem Peripherieabschnitt umgeben ist;
wobei der zentrale Abschnitt dicker als der Peripherieabschnitt ist, und der zweite Bereich des zentralen Abschnitts kleiner als ein dritter Bereich des offenen Endes der Kammer (21) ist, von welcher der zentrale Abschnitt darüber angeordnet ist.

14. Membranpumpe gemäß Anspruch 13, wobei die Kammer (21) angeschrägte Innenwände hat; und wobei der zentrale Abschnitt des Membranelements (33) zentral über dem offenen Ende angeordnet ist, und der erste Bereich des Membranelements (33) größer als der dritte Bereich ist.

15. Membranpumpe gemäß einem beliebigen der Ansprüche 12 bis 14, wobei das Pumpengehäuse (1) eine vergrößerte Fläche hat, welche das offene Ende der Kammer umgibt, wobei der Gesamtbereich mindestens dieselbe Größe wie der erste Bereich des Membranelements (33) hat.

16. Pumpe gemäß Anspruch 15, wobei das Membranelement (33) auf verschiebbare Weise zwischen der länglichen Fläche des Pumpengehäuses (1) und einem zweiten Bauteil (5) des Pumpengehäuse (1) eingespannt ist.

17. Verfahren zur Montage eines Magnetkreises für eine Schwingspule, umfassend:
Vorsehen eines Magnetbechers (7), der eine einseitig offene zylindrische Form mit einer Basis aufweist, wobei die Basis eine innere Fläche hat;
Vorsehen eines konischen Magneten (8), der eine Seite mit mindestens einer teilweise konischen Form hat;
Vorsehen eines Polschuhs (9), der eine Seite mit einer vertieften konischen Form aufweist, die der konischen Form des Magneten entspricht;
Stapeln des Magnetbechers (7), des konischen Magneten (8) und des Polschuhs (9), so dass der konische Magnet (8) zentral auf der Basis innerhalb des Magnetbechers (7) angeordnet ist, der Polschuh (9) so auf dem konischen Magneten (8) angeordnet ist, dass die Seite des Polschuhs (9) mit der vertieften konischen Form in Kontakt mit der Seite des konischen Magneten (8) mit einer konischen Form steht, wobei der Stapel so angeordnet ist, dass ein Luftspalt (11) zwischen einer inneren Wandfläche (20) des Magnetbechers (7) und dem gestapelten konischen Magneten (8) und dem Polschuh (9) entsteht, was durch Nutzung der konischen Formen und einer Magnetkraft des Magneten geschieht, so dass sich die Teile beim Stapeln selbst ausrichten.

## Revendications

1. Circuit magnétique pour une bobine acoustique, comprenant :
une coupelle magnétique (7) qui a une forme cylindrique ouverte d'un seul côté avec une base, ladite base a une surface intérieure,
un aimant conique (8) qui a un côté avec une forme au moins partiellement conique,
une pièce polaire (9) qui a un côté avec une forme conique creuse correspondant à ladite forme conique dudit aimant conique (8),
dans lequel ladite coupelle magnétique (7), ledit aimant conique (8) et ladite pièce polaire (9) sont empilés de sorte que ledit aimant conique (8) soit disposé de manière centrale sur ladite base à l'intérieur de ladite coupelle magnétique (7), ladite pièce polaire (9) est disposée sur l'aimant conique (8) de sorte que ledit côté avec une forme conique creuse de ladite pièce polaire (9) soit en contact avec ledit côté avec une forme conique dudit aimant conique (8), ledit empilement est disposé de sorte qu'un espace d'air (11) soit obtenu entre une surface de paroi intérieure (20) de ladite coupelle magnétique (7) et ledit aimant conique (8) empilé et ladite pièce polaire (20).

2. Circuit magnétique selon la revendication 1, dans lequel ladite base a une surface intérieure avec une forme partiellement conique dépassant vers l'intérieur de ladite coupelle magnétique (7) et ladite forme conique se trouve au niveau d'une partie centrale de ladite base de ladite forme cylindrique, et dans lequel ledit aimant (8) a un deuxième côté avec une forme conique creuse correspondant à ladite forme conique de ladite surface intérieure de ladite base.

3. Circuit magnétique selon la revendication 2, dans lequel la base a une surface extérieure avec une forme conique creuse.

4. Circuit magnétique selon l'une quelconque des revendications 1 à 3, dans lequel une bobine (13) est disposée dans ledit espace d'air (11).

5. Circuit magnétique selon la revendication 4, dans lequel ladite bobine (13) est entrelacée avec un revêtement auto-adhésif.

6. Circuit magnétique selon l'une quelconque des revendications 1 à 5, dans lequel ledit empilement possède un alésage (6) traversant au moins partiellement et ledit alésage (6) est disposé au centre dudit empilement.

7. Circuit magnétique selon la revendication 6, dans lequel un arbre est disposé dans ledit alésage (6), et ledit arbre est connecté à ladite bobine (13).

8. Circuit magnétique selon la revendication 7, dans lequel ledit arbre est mobile linéairement dans un mouvement de course en va-et-vient.

9. Circuit magnétique selon l'une quelconque des revendications 1 à 8, dans lequel les angles desdites formes coniques se situent dans la plage de 10 à 45 degrés.

10. Circuit magnétique selon l'une quelconque des revendications 1 à 9, dans lequel ledit aimant conique (8) est constitué de néodyme ou de samarium-cobalt ou d'alnico.

11. Circuit magnétique selon l'une quelconque des revendications 1 à 10, dans lequel la pièce polaire (9) et ladite coupelle magnétique (7) sont constitués de métaux ou d'alliages ferromagnétiques.

12. Pompe à membrane, comprenant :
un circuit magnétique selon l'une quelconque des revendications 1 à 10,
un carter de pompe (1) avec une chambre (21) avec une extrémité ouverte,
un élément de membrane (33) ayant une première zone et qui est disposé pour couvrir ladite extrémité ouverte de ladite chambre (21), et
dans laquelle ledit circuit magnétique est disposé et prévu pour transférer une force par un mouvement de course sur ladite membrane (33).

13. Pompe à membrane selon la revendication 12, dans laquelle ledit élément de membrane (33) comprend une section centrale avec une deuxième zone entourée par une section périphérique,
dans laquelle ladite section centrale est plus épaisse que ladite section périphérique, et ladite deuxième zone de ladite section centrale est plus petite qu'une troisième zone de ladite extrémité ouverte de ladite chambre (21) sur laquelle ladite section centrale est disposée.

14. Pompe à membrane selon la revendication 13, dans laquelle ladite chambre (21) a des parois intérieures chanfreinées, et dans laquelle ladite section centrale dudit élément de membrane (33) est disposée de manière centrale sur ladite extrémité ouverte, et ladite première zone dudit élément de membrane (33) est plus grande que ladite troisième zone.

15. Pompe à membrane selon l'une quelconque des revendications 12 à 14, dans laquelle ledit carter de pompe (1) a une surface élargie entourant ladite extrémité ouverte de ladite chambre avec une surface totale ayant au moins la même dimension que ladite première zone dudit élément de membrane (33).

16. Pompe selon la revendication 15, dans laquelle ledit élément de membrane (33) est serré avec possibilité de coulissement entre ladite surface allongée dudit carter de pompe (1) et un deuxième élément (5) dudit carter de pompe (1).

17. Procédé d'assemblage d'un circuit magnétique pour une bobine acoustique, comprenant les étapes consistant à :
fournir une coupelle magnétique (7) qui a une forme cylindrique ouverte d'un seul côté avec une base, ladite base a une surface intérieure,
fournir un aimant conique (8) qui a un côté avec une forme au moins partiellement conique,
fournir une pièce polaire (9) qui a un côté avec une forme conique creuse correspondant à ladite forme conique dudit aimant,
empiler ladite coupelle magnétique (7), ledit aimant conique (8) et ladite pièce polaire (9) de sorte que ledit aimant conique (8) soit disposé de manière centrale sur ladite base à l'intérieur de ladite coupelle magnétique (7), ladite pièce polaire (9) est disposée sur l'aimant conique (8) de sorte que ledit côté avec une forme conique creuse de ladite pièce polaire (9) soit en contact avec ledit côté avec une forme conique dudit aimant conique (8), ledit empilement est disposé de sorte qu'un espace d'air (11) soit obtenu entre une surface de paroi intérieure (20) de ladite coupelle magnétique (7) et ledit aimant conique empilé (8) et ladite pièce polaire (9), en utilisant lesdites formes coniques et une force magnétique dudit aimant pour que lesdites parties s'alignent lorsqu'elles sont empilées.
